# EUROPEAN PATENT APPLICATION

(11) **EP 1 988 145 A2**
(43) Date of publication of application: **05.11.2008**
(21) Application number: 08154520.4
(22) Date of filing: 15.04.2008
(51) Int. Cl.: C09K 11/77, H01J 61/44

(54) **Phosphor, light-emitting member, and image display apparatus**

(30) Priority: 25.04.2007 JP 2007116151
(71) Applicant: Canon Kabushiki Kaisha, Tokyo 146-8501 (JP)
(72) Inventor: Souma, Makoto, Ohta-ku Tokyo, Tokyo 146-8501 (JP); Sasaguri, Daisuke, Ohta-ku Tokyo, Tokyo 146-8501 (JP)
(74) Representative: TBK-Patent

(57) **Abstract**

A phosphor of the present invention includes BaₓSr₁₋ₓGa₂S₄:Eu, where 0 < X < 0.5. Preferably, 0.03 ≤ X ≤ 0.4. A light-emitting member of the present invention includes a base member; and a phosphor arranged on the base member. An image display apparatus of the present invention includes the light-emitting member and an excitation source for light emitting the light-emitting member.

## Description

### BACKGROUND OF THE INVENTION

### Field of the Invention

The present invention relates to a phosphor, and a light-emitting member and an image display apparatus using the same.

### Description of the Related Art

Various phosphor materials have been recently researched to improve luminance, color purity, and the like for a display phosphor. An electron beam excited phosphor conventionally represented by CRT includes ZnS:Cu, Al; ZnS:Ag, Al; Y₂O₂S:Eu, and the like. Phosphor materials such as SrGa₂S₄:Eu and the like have been also recently researched as multicomponent sulfide phosphor material in a flat panel display application.

However, in a P22 type CRT phosphor of the prior art, sufficient performance cannot be obtained in both color reproducing range and luminance. The green phosphor SrGa₂S₄:Eu described in Japanese examined patent publication No. 60-38431 has wider color reproducing range compared to the conventional ZnS:Cu, Al, but further enlargement of color reproducing range and enhancement in luminance have been desired. US3,639,254 discloses phosphor R₁₋ₓGa₂S₄:Euₓ (R is alkaline earth metal selected from Ca, Sr, Ba). Japanese Patent Application Laid-Open No. 2007-36041 discloses phosphor Sr_{1-x-y}CaₓBa_{y}Ga₂S₄:Eu. Japanese Patent Application Laid-Open No. 2007-112950 (correspond to US Publication US-2007-0090748) discloses phosphor SrₓBa₁₋ₓGa₂S₄:Eu (0 < X < 1) .

### SUMMARY OF THE INVENTION

The present invention provides a high luminance phosphor, a light-emitting member capable of displaying a high color reproducing range, and an image display apparatus using the same.

The present invention in its first aspect provides a phosphor as specified in claim 1.

The present invention in its second aspect provides a phosphor as specified in claim 2.

The present invention in its third aspect provides a light-emitting member as specified in claims 3 and 5.

The present invention in its fourth aspect provides a light-emitting member as specified in claims 4 and 5.

The present invention in its fifth aspect provides an image display apparatus as specified in claims 6 and 7.

According to the phosphor of the present invention, the color reproducing range can be enlarged and the luminance can be enhanced. Therefore, a brighter image display apparatus of satisfactory color reproducibility can be obtained.

Further features of the present invention will become apparent from the following description of exemplary embodiments with reference to the attached drawings.

### BRIEF DESCRIPTION OF THE DRAWINGS

FIG. 1 is a CIE chromaticity diagram showing a display color gamut of an emission color of the phosphor material of the present invention;
FIG. 2 is a view showing a configuration of a fluorescence film using the phosphor material of the present invention;
FIG. 3 is a cross sectional view showing an FED (Field Emission display) according to one example of an image display apparatus of the present invention;
FIG. 4 is a view showing a Spindt type electron-emitting device used in the FED;
FIG. 5 is a perspective view showing the FED according to one example of the image display apparatus of the present invention;
FIG. 6 is a CIE chromaticity diagram showing a display color gamut of a display formed in Example 3;
FIG. 7A and FIG. 7B are frame format views showing a configuration of a surface conduction electron-emitting device that can be applied to the image display apparatus of the present invention; and
FIG. 8 is a perspective view showing one example of a panel configuration of the image display apparatus according to the present invention using the surface conduction electron-emitting device.

### DESCRIPTION OF THE EMBODIMENTS

The embodiments of the present invention will now be described in detail.

The phosphor material of the present invention has a host material represented by a composition formula (general formula) of BaₓSr₁₋ₓGa₂S₄ and europium which acts as a luminescent center (activator). Where, X representing the composition ratio of the host material takes a value in a range of 0 < X < 0.5, and the composition will not become SrGa₂S₄ or Ba_{0.5}Sr_{0.5}Ga₂S₄.

The concentration of the europium acting as the luminescent center is preferably adjusted to 0.01 to 10 atomic percent with respect to the sum of the elements Sr and Ba of the elements composing the host material. The Eu compound includes europium metal, europium chloride, europium fluoride, europium oxide, or the like.

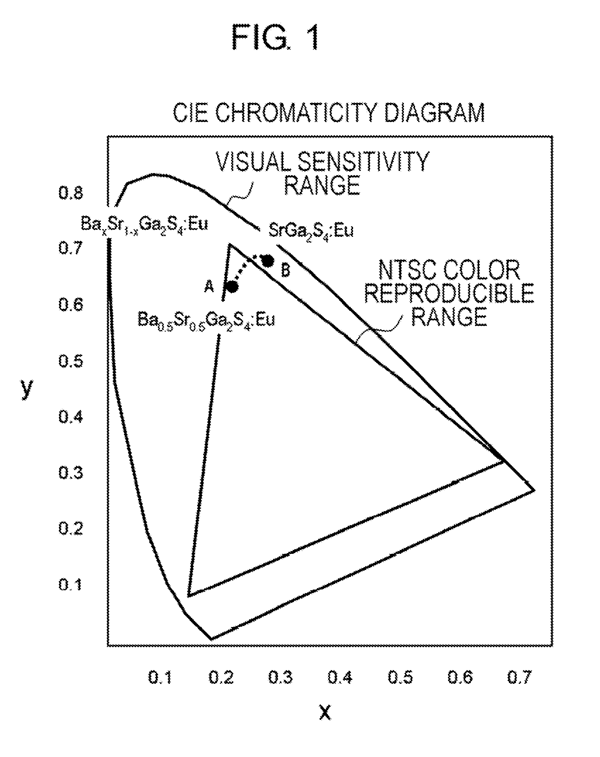

Regarding the phosphor material of the present invention, changing the composition ratio X of the host material allows changing emission color from 532 nm being a light emission peak wavelength of SrGa₂S₄:Eu to 522 nm being a light emission peak wavelength of Ba_{0.5}Sr_{0.5}Ga₂S₄:Eu, whereby an optimum green light emission color can be set. The change in emission color at this moment is shown in FIG. 1 with an xy chromaticity diagram showing a two-dimensional color space by CIE color system. In the figure, point A is Ba_{0.5}Sr_{0.5}Ga₂S₄:Eu and point B is SrGa₂S₄:Eu. A broken line connecting point A and point B represents BaₓSr₁₋ₓGa₂S₄:Eu according to the present invention. The chromaticity coordinate of point A (X = 0.5) is (x, y) = (0.219, 0.630), and the chromaticity coordinate of point B (X = 0) is (x, y) = (0.281, 0.671). Furthermore, light emission of higher luminance than SrGa₂S₄:Eu can be observed in the composition range of the phosphor material of the present invention. The phosphor material in which light emission having a light emission peak wavelength of greater than 522 nm and smaller than 532 nm and having higher luminance than SrGa₂S₄:Eu is observed is obtained by adjusting the composition ratio X of Sr and Ba to a desired value.

The luminance of the phosphor material of the present invention changes by changing the Ba composition ratio. For the image display apparatus, the X value of the composition ratio of the host material is preferably selected from a range of 0 < X < 0.5 in view of higher luminance. If X = 0.5, the light emission efficiency lowers by about 5% compared to SrGa₂S₄:Eu (X = 0) which is not added with Ba. The X value of the composition ratio of the host material is preferably selected from a range of 0.03 ≤ X ≤ 0.4 in view of widening the color gamut. If the X value is in such range, the light emission efficiency can be increased and the color gamut can be further widened. The X value is more preferably selected from a range of 0.1 ≤ X ≤ 0.4.

The composition ratio of the host material can be checked with X-ray photoelectron spectroscopy (XPS), Energy Dispersive X-ray Spectroscopy (EDS), X-ray fluorescence spectroscopy, or the like.

Processes of producing the phosphor material of the present invention include solid phase crystallization method which mixes and crystallizes the material powder. One example thereof will be described.

First, strontium sulfide powder (SrS), barium sulfide powder (BaS), gallium sulfide powder (Ga₂S₃), and europium chloride powder (EuCl₃) are mixed. Here, the materials are mixed to meet the weight ratio of SrS:BaS:Ga₂S₃:EuCl₃ ≅ 0.39:0.14:1.0:0.03 in order to obtain the composition ratio represented by Ba_{0.2}Sr_{0.8}Ga₂S₄:Eu. The composition ratio of GaS may be used as gallium sulfide.

The material mixed in this manner is put into a crucible formed by alumina etc., and is processed in an atmosphere of hydrogen sulfide at a temperature of 1000°C for about three hours to be crystallized. Gas diluted with inert gas such as argon, nitrogen, or others to a few percent may be used as the hydrogen sulfide atmosphere. The crystallizing process may be performed in an atmosphere of inert gas such as argon and nitrogen.

Temperature in the crystallizing process may range from about 700°C to 1400°C depending upon the grain size and crystallinity of the material powder to be used.

An image display apparatus using the phosphor material of the present invention will now be described in detail.

Conventionally, the color display represented by CRT display combines three types of phosphors of three colors of red (R), green (G), and blue (B) to form a color image.

A display of high luminance and wide color gamut can be realized by using the above described phosphor formed using the phosphor material of the present invention for at least one type of phosphor. Specifically, a black matrix is formed on the face plate and the phosphor particle is formed through methods such as screen printing, similar to the phosphor for the conventional CRT display, the field emission display (FED), and the surface conduction emission display.

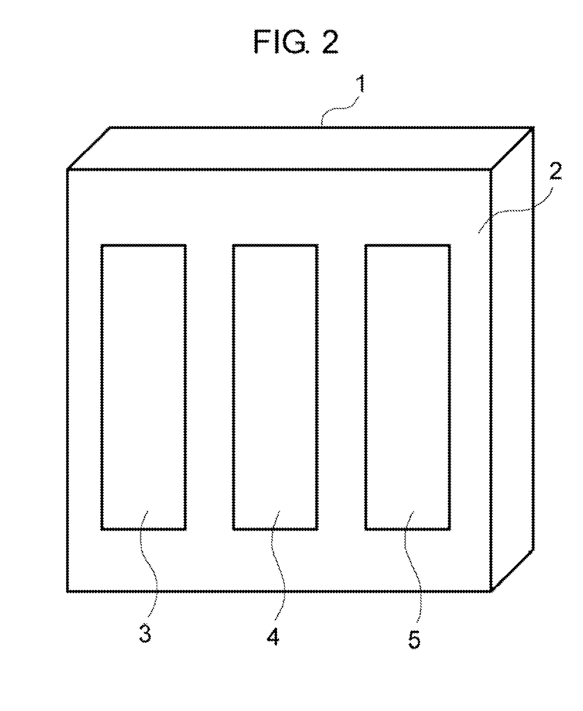

FIG. 2 shows one example of a light-emitting member in which the phosphor formed using the phosphor material of the present invention is arranged on the base member. FIG. 2 shows a configuration of one pixel of a fluorescence film, where reference numeral 1 denotes a base member, 2 denotes a light absorption layer of black matrix etc. and 3 to 5 denote phosphors having different light emission peak wavelengths from each other.

As shown in FIG. 2, a red phosphor 3 having a light emission peak wavelength in a wavelength region of 620 nm to 780 nm, a blue phosphor 4 having a light emission peak wavelength in a wavelength region of 435 nm to 480 nm, and a phosphor 5 formed using the phosphor material of the present invention are at least arranged on the base member 1 to form a light-emitting member including phosphor regions of three colors. The order and the arrangement of the phosphor region are not limited to the above arrangement. The light-emitting member of the present invention may be formed with a phosphor region of one color of only the phosphor 5. The light-emitting member of the present invention may be formed with phosphor regions of four or more colors if necessary to realize a higher luminance display having wide color gamut.

The light-emitting member described above may also include an electrode to be applied with a predetermined potential. The electrode includes aluminum and ITO, and is formed through vapor deposition method and sputtering method.

For the phosphor material configuring each phosphor of red and blue, Y₂O₂S:Eu (red), CaS:Eu (red), ZnS:Ag, Al (blue), CaMgSi₂O₆:Eu (blue) etc., may be appropriately combined and used according to the display characteristics of the light-emitting member.

If Y₂O₂S:Eu is used for red, ZnS:Ag, Al is used for blue, and Ba_{0.1}Sr_{0.9}Ga₂S₄:Eu of the present invention is used, the display color gamut enhances by about 7% compared to the combination of three colors of the above red and blue phosphors, and green phosphor SrGa₂S₄:Eu conventionally used. In luminance, Ba_{0.1}Sr_{0.9}Ga₂S₄:Eu obtains higher luminance than SrGa₂S₄:Eu.

Regarding the optimum configuring ratio of BaₓSr₁₋ₓGa₂S₄:Eu, the optimum composition ratio can be selected according to the combination of the phosphor materials of the other two colors to be used and the required luminance characteristic, and is preferably selected from 0.03 ≤ X ≤ 0.4.

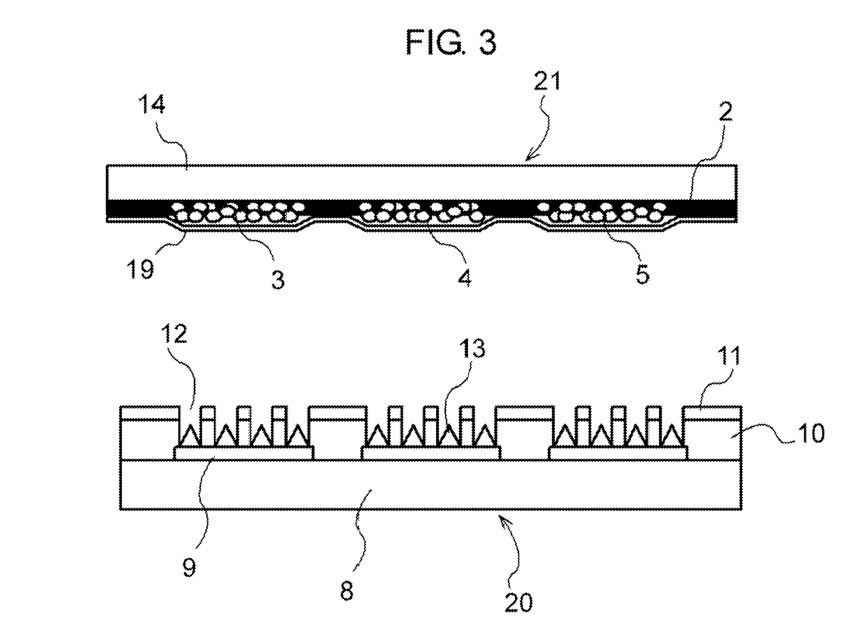

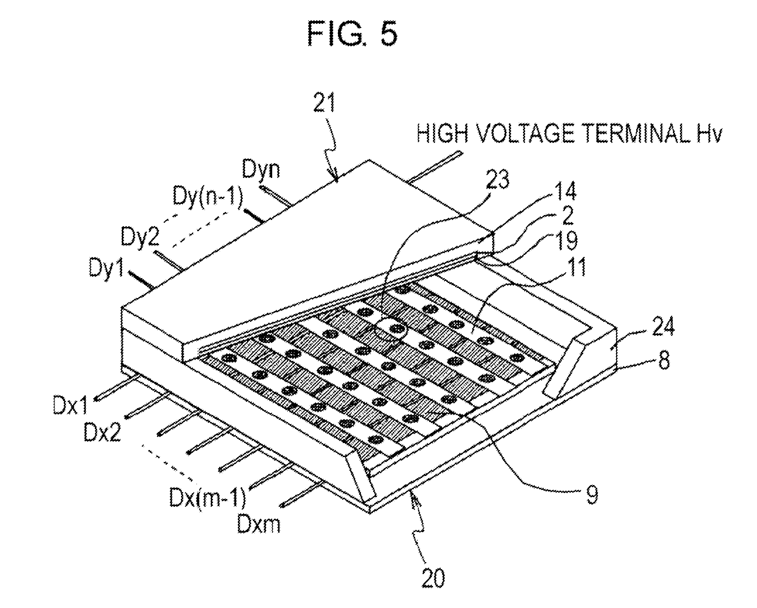

The FED shown in FIG. 3 and FIG. 5 can be formed using the phosphors of three colors including the phosphor formed using the phosphor material of the present invention. FIG. 3 is a cross sectional view. FIG. 5 is a perspective view partially cutout to show the internal configuration. In FIGS. 3 and 5, reference numeral 2 denotes a black matrix, 3, 4, 5 denote phosphor materials, 9 denotes a cathode electrode, 10 denotes an insulating layer, 11 denotes a gate electrode, 12 denotes an opening of the insulating layer 10, 13 denotes an electron-emitting portion, 14 denotes a substrate (face plate 21 side), 19 denotes a metal back, and 21 denotes a face plate. Furthermore, 8 denotes a substrate (rear plate 20 side), 23 denotes an electron-emitting region, and 24 denotes a supporting frame.

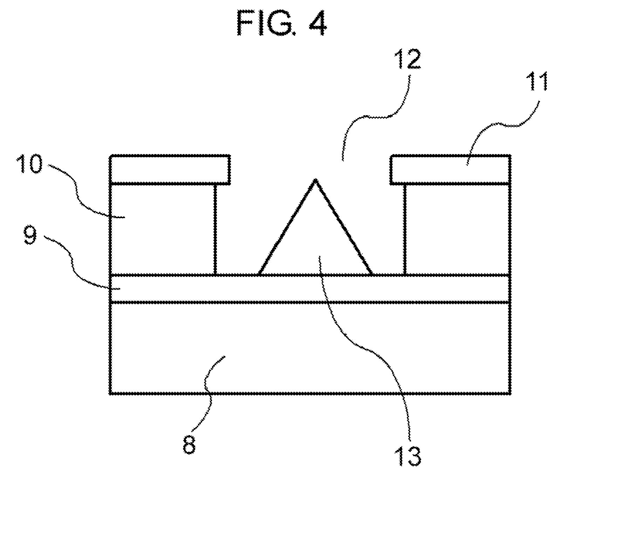

The display of FIGS. 3 and 5 uses a Spindt type electron-emitting device as an excitation source. A configuration of one device is shown in FIG. 4. The reference numerals in FIG. 4 are the same as in FIGS. 3 and 5. An optimum FED including MIM type or surface conduction type can be selected other than the Spindt type.

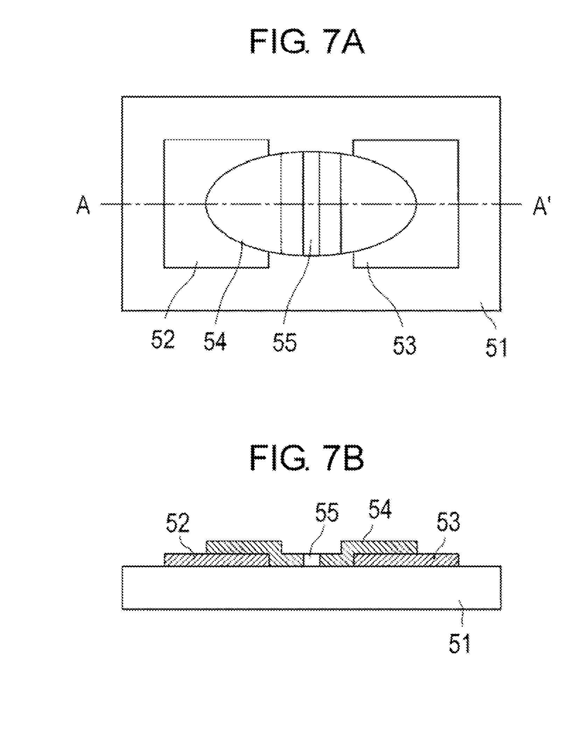

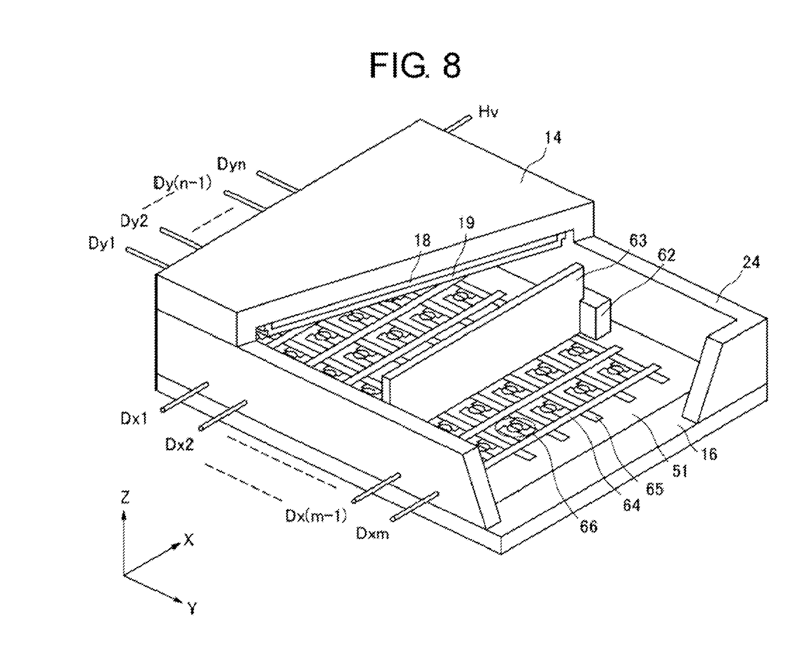

FIGS. 7A and 7B show a configuration of the surface conduction electron-emitting device, and FIG. 8 shows a schematic configuration of a panel of the image display apparatus of the present invention using the same. FIG. 8 is a perspective view partially cutout to show the internal configuration. In the figure, reference numeral 51 denotes a substrate, 52, 53 denote device electrodes, 54 denotes a conductive film, 55 denotes an electron-emitting portion, 62 denotes a fixing member, 63 denotes a spacer, 64 denotes a X-direction wiring, 65 denotes a Y-direction wiring, and 66 denotes an electron-emitting device, where same reference numerals are denoted for members same as in FIG. 5.

The present invention will be described in detail below using specific examples.

### (Example 1)

A phosphor material of the present invention was produced. Strontium sulfide powder (SrS), barium sulfide powder (BaS), gallium sulfide powder (Ga₂S₃), and europium chloride powder (EuCl₃) were used as the material, and the respective powders were mixed using a mortar. The respective materials were weighed to meet the weight ratio of SrS:BaS:Ga₂S₃:EuCl₃ ≅ 0.44:0.09:1:0.03 so that the host material has a composition represented by Ba_{0.1}Sr_{0.9}Ga₂S₄. The concentration of Eu was three atomic percent with respect to the molar concentration of Sr + Ba.

The powder was then put into a crucible made of alumina, arranged in an atmosphere of hydrogen sulfide gas diluted with argon to 2%, and subjected to a crystallizing process in the atmosphere of 1000°C for two hours. The composition ratio of the powder of the phosphor material produced in the above manner was analyzed by X-ray fluorescent. As a result, it was confirmed to have obtained the phosphor material with the composition ratio of Ba:Sr:Ga:S:Eu = 1.05:8.68:20.3:40.9:0.29 at molar ratio.

Subsequently, an evaluation was carried out on the light-emitting characteristic of the powder of the produced phosphor material. Luminance obtained by irradiating 0.1 gram powder with the electron beam having a current density of 1 mA/cm² was 454 cd/m². This luminance is approximately 1.30 times as high as that of the phosphor SrGa₂S₄:Eu produced at the same conditions. The emission color expressed by the CIE chromaticity coordinate was given by (x, y) = (0.265, 0.683).

### (Example 2)

A phosphor material different in composition ratio was produced through the same process as in Example 1. Strontium sulfide powder (SrS), barium sulfide powder (BaS), gallium sulfide powder (Ga₂S₃), and europium chloride powder (EuCl₃) were used as the material. The materials were weighed to meet the weight ration of SrS:BaS:Ga₂S₃:EuCl₃ ≅ 0.30:0.28:1:0.03 so that the host material has a composition represented by Ba_{0.4}Sr_{0.6}Ga₂S₄.

An evaluation was conducted on the light-emitting characteristic of the phosphor material obtained by the above process. Luminance obtained by irradiating 0.1 gram of powder with electron beam having a current density of 1 mA/cm² was 363 cd/m². This luminance is approximately 1.04 times as high as that of the SrGa₂S₄:Eu phosphor. The CIE chromaticity coordinate was (x, y) = (0.239, 0.663).

### (Example 3)

An image display apparatus was produced using the phosphor material produced in Example 1. The image display apparatus of the present example is the FED of FIG. 3 equipped with the device whose configuration is shown in FIG. 4.

First, a method of producing a rear plate (electron source substrate) 20 will be described.

A 200 nm aluminum as the cathode electrode 9 was deposited on the glass substrate 8 by the sputtering method. A 600 nm of silicon dioxide was then deposited as the insulating layer 10 by the CVD method, and 100 nm of titanium film was deposited as the gate electrode 11 by the sputtering method.

The opening 12 with a diameter of 1 µm was formed in the gate electrode 11 and the insulating layer 10 by photolithography and etching process.

The substrate passed through the above production process was arranged in the sputtering device, the air in the device was evacuated and then molybdenum was deposited obliquely to form the electron-emitting portion 13 while the substrate 8 was being rotated. Subsequently, the unwanted molybdenum was removed by lift-off to form the electron-emitting portion 13. The rear plate 20 was formed by the above process. Description has been made of an area corresponding to one pixel, but actually, such configurations are arranged on the substrate in a matrix form.

A method of producing a face plate (fluorescent surface) 21 will now be described.

The black matrix 2 was formed on the glass substrate 14 (base member) by screen printing method to remove unnecessary light-emitting surface. An aperture was formed in a region to be formed with the phosphors 3, 4, 5 shown in FIG. 2.

The powder of the phosphor material was dispersed in a binder etc. to form a paste, and the paste was applied to the aperture by screen printing method to form the fluorescent surface. The phosphor material used in this case is Y₂O₂S : Eu to form the red phosphor 3, ZnS:Ag, Cl to form the blue phosphor 4, and Ba_{0.1}Sr_{0.9}Ga₂S₄ : Eu to form the phosphor 5. Ba_{0.1}Sr_{0.9}Ga₂S₄ : Eu was produced at the same conditions as in Example 1.

After a filming process, a 100 nm aluminum as the metal back 19 was deposited through an evaporation method to form the face plate 21. Description has been made of an area corresponding to one pixel, but actually, such configurations are arranged on the substrate in a matrix form.

The rear plate 20 and the face plate 21 produced in the above manner were combined to produce the FED. The electron-emitting region 23 is arranged in a region where the cathode electrode 9 and the gate electrode 11 cross. Each of the plurality of electron-emitting regions 23 is arranged so as to correspond to each phosphor 3 to 5 shown in FIG. 2. The supporting frame 24 is arranged at the joining part of the rear plate 20 and the face plate 21.

High voltage terminal Hv is connected to the face plate 21. The application voltage is 10kV.

Signal input terminals Dx1 to Dxm, and Dy1 to Dyn are connected to the cathode electrode 9 and the gate electrode 11, respectively, in the rear plate 20, where a signal from the drive driver is input to the respective terminal.

An FED forming an image by combining three colors of red (Y₂O₂S:Eu), green (SrGa₂S₄:Eu), and blue (ZnS:Ag, Al) of the prior art was produced for comparison.

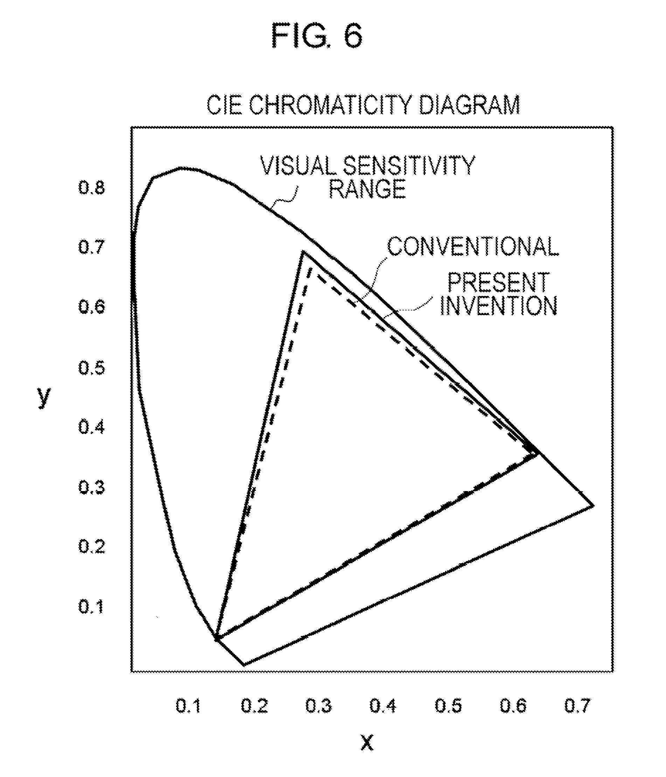

The display color gamut of the display produced in the above manner is shown in the CIE chromaticity diagram of FIG. 6. The FED of the present invention realized enlargement of the color gamut by about 7% in the display region compared to the FED of the prior art.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.
A phosphor of the present invention includes BaₓSr₁ₓGa₂S₄:Eu, where 0 < X < 0.5. Preferably, 0.03 ≤ X ≤ 0.4. A light-emitting member of the present invention includes a base member; and a phosphor arranged on the base member. An image display apparatus of the present invention includes the light-emitting member and an excitation source for light emitting the light-emitting member.

## Claims

1. A phosphor comprising:
BaₓSr₁₋ₓGa₂S₄:Eu,
where 0 < X < 0.5.

2. A phosphor according to claim 1, wherein 0.03 ≤ X ≤ 0.4.

3. A light-emitting member comprising:
a base member; and
a phosphor arranged on the base member,
wherein the phosphor includes the phosphor according to claim 1 or 2.

4. A light-emitting member comprising:
a base member; and
at least three types of phosphors having different light emission peak wavelength from each other,
wherein one type of the phosphor includes the phosphor according to claim 1 or 2.

5. A light-emitting member according to claim 3 or 4, further comprising an electrode arranged on the base member and to be applied with a potential.

6. An image display apparatus comprising:
the light-emitting member according to claim 3, 4, or 5; and
an excitation source for light emitting the light-emitting member.

7. An image display apparatus according to claim 6, wherein the excitation source is an electron-emitting device.
